# EUROPÄISCHE PATENTSCHRIFT

(11) **EP 2 995 417 B1**
(45) Veröffentlichungstag und Bekanntmachung des Hinweises auf die Patenterteilung: **15.11.2017**
(21) Anmeldenummer: 15177473.4
(22) Anmeldetag: 20.07.2015
(51) Int. Cl.: B23P 11/02, B23P 19/033, F01L 1/047, B23P 19/10

(54) **VORRICHTUNG ZUR MONTAGE MINDESTENS EINES EINE AUSNEHMUNG FÜR EINE WELLE AUFWEISENDEN FUNKTIONSELEMENTS**
DEVICE FOR MOUNTING AT LEAST ONE FUNCTIONAL ELEMENT WITH A RECESS FOR A SHAFT
DISPOSITIF DE MONTAGE D'AU MOINS UN ELEMENT FONCTIONNEL PRESENTANT UN EVIDEMENT POUR UN ARBRE

(30) Priorität: 10.09.2014 DE 102014218118
(43) Veröffentlichungstag der Anmeldung: 16.03.2016
(73) Patentinhaber: Mahle International GmbH, 70376 Stuttgart (DE)
(72) Erfinder: Flender, Thomas, 71735 Eberdingen (DE); Himstedt, Justus, 70372 Stuttgart (DE); Kreisig, Michael, 70197 Stuttgart (DE); Menonna, Antonio, 71254 Ditzingen (DE); Rieger, Ralf, 71711 Steinheim a.d. Murr (DE); Steichele, Stefan, 70839 Gerlingen (DE)
(74) Vertreter: BRP Renaud & Partner mbB Rechtsanwälte Patentanwälte Steuerberater

(56) Entgegenhaltungen:
- WO-A2-2013/048166
- DE-A1-102008 032 322
- DE-A1-102008 064 194
- DE-A1-102012 211 327
- JP-A- S6 328 526
- JP-A- 2000 073 709
- DATABASE WPI Week 198229 Thomson Scientific, London, GB; AN 1982-J7620E XP002752946, -& SU 867 592 A1 (PENZA POLY) 30. September 1981 (1981-09-30)

## Beschreibung

Die vorliegende Erfindung betrifft eine Vorrichtung zur Montage mindestens eines eine Ausnehmung für eine Welle aufweisenden Funktionselements nach dem Oberbegriff des Anspruchs 1. Die Erfindung betrifft außerdem ein Verfahren zum Fügen von mindestens einem eine Ausnehmung aufweisenden Funktionselement auf einer Welle. Eine solche Vorrichtung und ein solches Verfahren sind aus der JP S63 28526 A bekannt. Zum Fügen von Funktionselementen, insbesondere von Nocken, auf einer Welle, insbesondere auf einem Nockenwellenrohr, müssen die Naben bzw. Ausnehmungen der einzelnen Funktionselemente zur Achse der Welle ausgerichtet werden. Sollen ein oder gleichzeitig mehrere Funktionselemente in einem Rutsch durch Einführen der Welle gefügt werden, müssen sämtliche Funktionselemente entsprechend ausgerichtet werden.
Aus der DE 10 2008 064 194 A1 ist eine hierfür geeignete Vorrichtung zur Positionierung mehrerer eine Ausnehmung für eine Welle aufweisender Funktionselemente, insbesondere Nocken, in einer vorbestimmten Winkelposition auf der Welle bekannt, wobei die Vorrichtung mehrere für jeweils ein Funktionselement bestimmte Aufnahmen aufweist. Die Aufnahmen sind dabei derart positionierbar, dass die Ausnehmungen der Funktionselemente im Wesentlichen auf einer gemeinsamen Geraden liegen.
Bei der Montage von einem Nocken oder von mehreren Nocken auf einmal auf einer Welle, wird üblicherweise der zu montierende Nocken mit einem Greifer ergriffen oder in einem Halter gehalten und erwärmt und anschließend das Nockenwellenrohr oder allgemein eine Welle eingefahren, bis der zumindest eine Nocken seine Endposition erreicht hat. Damit das Nockenwellenrohr oder generell die Welle beim Durchfahren des Nockens bzw. generell des Funktionselements gestützt werden kann, fährt zuerst ein Reitstock mit einer Reitstockspitze von der entgegengesetzten Seite durch das Funktionselement hindurch und holt die Welle bzw. speziell das Nockenwellenrohr ab. Anschließend fährt der Reitstock zusammen mit der Welle durch die Ausnehmungen der Funktionselemente wieder zurück. Dabei sind die Funktionselemente oder speziell die Nocken bereits hinreichend genau positioniert, so dass zumindest die Reitstockspitze, die einen kleineren Durchmesser als die Welle aufweist, problemlos durch die Ausnehmungen fahren kann. Hierdurch können bereits mit dem Reitstockkopf falsch positionierte Funktionselemente zumindest grob ausgerichtet werden. Die Vorabkorrektur von Koaxialfehlern wird dann während des Durchfahrens der Welle nochmals durch die Einführfase am Wellenrohr fortgeführt und dadurch die Funktionselemente auf der Welle aufgefädelt.

Während des Durchfahrens der Welle kann es jedoch trotzdem vorkommen, dass das aufzufädelnde Funktionselement in Teilbereichen seiner Nabe mit der Welle in Kontakt kommt und es hierdurch zu einem kurzen Fressen bzw. zu einer Spanbildung kommen kann. Zudem kann die Gefahr bestehen, dass das Funktionselement im Greifer selbst in eine Schieflage kommt und dadurch in seiner Endposition in dieser Schieflage abkühlt und dadurch ein Positionsfehler entsteht.

Die vorliegende Erfindung beschäftigt sich daher mit dem Problem, eine Vorrichtung zur Montage mindestens eines eine Ausnehmung für eine Welle aufweisenden Funktionselements anzugeben, die die aus dem Stand der Technik bekannten Nachteile überwindet.

Dieses Problem wird erfindungsgemäß durch den Gegenstand des unabhängigen Anspruchs 1 sowie auch der unabhängigen Ansprüche 9 und 10 gelöst. Vorteilhafte Ausführungsformen sind Gegenstand der abhängigen Ansprüche.
Die vorliegende Erfindung beruht auf dem allgemeinen Gedanken, bei einer Vorrichtung zur Montage mindestens eines eine Ausnehmung für eine Welle aufweisenden Funktionselements auf der Welle und dort insbesondere in einer Reitstockspitze bzw. generell in einem Reitstock, einen Schwingungserreger vorzusehen und diesen beim Fügen mit dem mindestens einen Funktionselement zu aktivieren, wodurch ein "Anhaften" des Funktionselements an der Welle durch ständiges minimales Abrütteln vermieden und insbesondere die Kontaktkräfte verringert werden können. Hierdurch ist es insbesondere möglich, das für eine spätere Schiefstellung des Funktionselements, beispielsweise des Nockens, verantwortliche Hängenbleiben bzw. Verkippen des Funktionselements auszuschließen. Dies ist beim Durchfahren von mehr als einem Funktionselement besonders vorteilhaft, da bei mehreren zu durchfahrenden Funktionselementen das zuerst durchfahrene Funktionselement, beispielsweise der zuerst durchfahrene Nocken, bereits abkühlt und damit das zum Durchfahren zur Verfügung stehende Spiel immer kleiner und damit auch die Gefahr des Hängenbleibens vergrößert wird. Die Vibration und die dadurch entstehenden Kräfte sind selbstverständlich kleiner als die Greiferkraft in Greifern, mit denen der Nocken bzw. das Funktionselement gegriffen bzw. gehalten ist. Die erfindungsgemäße Vorrichtung weist dabei mindestens einen für jeweils ein Funktionselement bestimmten Halter bzw. Greifer auf, die bei mehreren Haltern vorzugsweise sogar vertikal übereinander angeordnet sind, sowie einen verstellbaren Führungsschlitten, mittels dem die Welle in einer ersten Richtung durch die Ausnehmungen der Funktionselemente schiebbar ist. Der zuvor erwähnte Reitstock ist dabei entgegen der ersten Richtung und damit entgegen der Welle bzw. des Führungsschlittens verstellbar und zugleich mit seiner Reitstockspitze mit einer Stirnseite der Welle koppelbar. Der Schwingungserreger ist nun im Reitstock und vorzugsweise in der Reitstockspitze angeordnet und erzeugt die zur verbesserten Montage erforderlichen Vibrationen bzw. Schwingungen. Mit der erfindungsgemäßen Vorrichtung kann somit ein Hängenbleiben bzw. ein Verkippen der zu montierenden Funktionselemente und insbesondere auch eine schiefe Fixierung derselben auf der Welle vorzugsweise gänzlich ausgeschlossen werden, wodurch eine besonders hohe Fertigungsqualität erzeugt werden kann. Damit die Vibrationen bzw. Schwingungen besonders vorteilhaft die Montage verbessern können, muss die Welle entsprechend elastisch ausgelegt sein, das eine minimale Auslenkung erfolgt bzw. die Halter bzw. Greifer für das mindestens eine Funktionselement müssen eine Verlagerung ermöglichen. Diese Verlagerung erfolgt vorzugsweise auf eine Ebene beschränkt (x-y) damit die axiale Position (z-Achse) des Funktionselements auf der Welle nicht beeinflusst wird.
Bei einer vorteilhaften Weiterbildung der erfindungsgemäßen Lösung weist die Reitstockspitze eine stirnseitige Fase auf, mittels welcher die Reitstockspitze zumindest teilweise in die Welle einsteckbar ist. Mittels dieser Fase ist auch ein Vorausrichten der einzelnen in den jeweiligen Greifern gegriffenen bzw. in den jeweiligen haltern gehaltenen Funktionselemente möglich, insbesondere sofern diese mit ihren Ausnehmungen nicht fluchtend zueinander angeordnet sind. Mit der stirnseitigen Fase kann auch eine schwingungsübertragende Kopplung mit der Welle erreicht werden, indem die Reitstockspitze gegen die Stirnseite der Welle gepresst und teilweise in diese eingesteckt wird. Die schwingungsübertragende Kopplung ist dabei für den erfindungsgemäßen Montagevorgang besonders wichtig.

Zweckmäßig ist der Schwingungserreger an- und abschaltbar. Dies ermöglicht es, die erfindungsgemäße Schwingungserzeugung lediglich temporär einzusetzen, beispielsweise zu einem beschleunigten Abkühlen einer thermisch gefügten Nockenwelle, sodass beispielsweise ein Nockenwellenrohr nach Erreichen seiner Endlage mittels des Schwingungserregers mit Schwingungen beaufschlagt werden kann und dadurch vibriert und einen stärkeren Mikrokontakt zur Nabe des Funktionselements bzw. zur Nabe des Nockens erfährt, wodurch eine schnellere Abkühlung bewirkt werden kann. Hierdurch lassen sich insbesondere die Taktzeiten reduzieren. Es ist auch denkbar die Schwingungserregung nur temporär während des Durchfahrens der Welle durch die Funktionselemente in einem oder mehreren Abschnitten zu aktivieren.

Bei einer weiteren vorteilhaften Ausführungsform der erfindungsgemäßen Lösung ist der Schwingungserreger hinsichtlich der Frequenz und der Amplitude der erzeugten Schwingungen einstellbar. Werden beispielsweise nur einzelne Funktionselemente, insbesondere Nocken, gefügt, oder befindet sich die Welle beim Fügen von mehreren Funktionselementen bereits in ihrer Endlage, kann die Amplitude bzw. die Frequenz gesteigert werden, um das Nockenwellenrohr verstärkt in einen Mikrokontakt mit der Nabe des Funktionselements zu bringen und damit eine schnellere Abkühlung zu bewirken. Für den normalen Montagevorgang kann somit die erste Amplitude bzw. eine erste Frequenz vorgesehen werden, die zum schnelleren Abkühlen dann in der Endphase gesteigert werden kann.

Bei einer weiteren vorteilhaften Ausführungsform der erfindungsgemäßen Lösung weist der Schwingungserreger einen Exzenter auf, der hydraulisch, elektrisch oder pneumatisch angetrieben ist. Ein derartiger Exzenter kann beispielsweise ein Elektromotor mit einer Unwucht sein, welcher in der Reitstockspitze angeordnet ist. Die Versorgung mittels elektrischer Energie kann dabei einfach über den Reitstock selbst erfolgen. In gleicher Weise kann der Exzenter selbstverständlich auch pneumatisch oder hydraulisch angetrieben sein.

Die vorliegende Erfindung beruht weiter auf dem allgemeinen Gedanken, ein Verfahren zum thermischen Fügen von zumindest einem eine Ausnehmung aufweisenden Funktionselement, beispielsweise Nocken, Ausgleichsmassen, Zahnräder und/oder Lager, auf einer Welle dadurch zu verbessern, dass die in den vorherigen Absätzen beschriebene Vorrichtung verwendet wird. Bei dem erfindungsgemäßen Verfahren wird somit zunächst das Funktionselement in einen Greifer/Halter der Vorrichtung eingelegt und dann oder bereits zuvor erwärmt.

Anschließend wird von unten der Reitstock durch die Ausnehmung des mindestens einen einzelnen Funktionselements gefahren, wodurch das Funktionselement, sofern dieses noch nicht bereits ausgerichtet ist, hinsichtlich seiner Ausnehmung fluchtend ausgerichtet werden kann. Sind mehrere Funktionselementes vorhanden, wird der Reitstock durch sämtliche Ausnehmungen sämtlicher Funktionselemente gefahren und zwar so weit, bis er mit seiner Reitstockspitze mit der im Führungsschlitten gehaltenen Welle stirnseitig gekoppelt werden kann. Ist die Kopplung bewirkt, wird der Schwingungserreger aktiviert und anschließend die Welle mittels des verstellbaren Führungsschlittens von oben durch die Ausnehmungen der Funktionselemente geschoben. Während des Durchschiebens erzeugt dabei der Schwingungserreger kontinuierlich Schwingungen bzw. Vibrationen, die insbesondere ein sogenanntes Anhaften der Funktionselemente, beispielsweise der Nocken, verhindern, bzw. Kontaktkräfte zwischen den Funktionselementen und der Welle durch ständiges minimales Rütteln zumindest reduzieren. Hierdurch ist insbesondere ein qualitativ äußerst hochwertiger Fertigungsprozess mit qualitativ höchstwertigen Endprodukten erreichbar. Bei einer im Durchmesser gestuften Welle mit abschnittsweise zurückgenommenem Durchmesser ist es auch denkbar die Schwingungsanregung nur temporär bei Durchfahren eines Abschnitts mit größerem Durchmesser zu aktivieren.
Zweckmäßig werden die Frequenz und/oder die Amplitude der vom Schwingungserreger erzeugten Schwingungen erhöht, sobald die Welle ihre Endlage erreicht hat. Durch die Erhöhung der Frequenz bzw. der Amplitude wird ein verstärkter Kontakt zwischen der Nabe des Funktionselements und der Welle erreicht, wodurch ein schnelleres Abkühlen und damit auch eine Reduzierung der Taktzeit erzielbar sind.
Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
Dabei zeigen, jeweils schematisch,
- Fig. 1: eine teilweise geschnittene Darstellung einer erfindungsgemäßen Vorrichtung zur Montage mehrerer eine Ausnehmung für eine Welle aufweisende Funktionselemente,
- Fig. 2: eine Darstellung wie in Figur 1, jedoch bei anders ausgebildetem Reitstock,
- Fig. 3: eine Darstellung wie in Figur 2, jedoch bei anders ausgebildetem Reitstock und anders ausgebildeter Reitstockspitze,
- Fig. 4: eine Darstellung wie in Figur 1, jedoch mit Haltebalkonen.

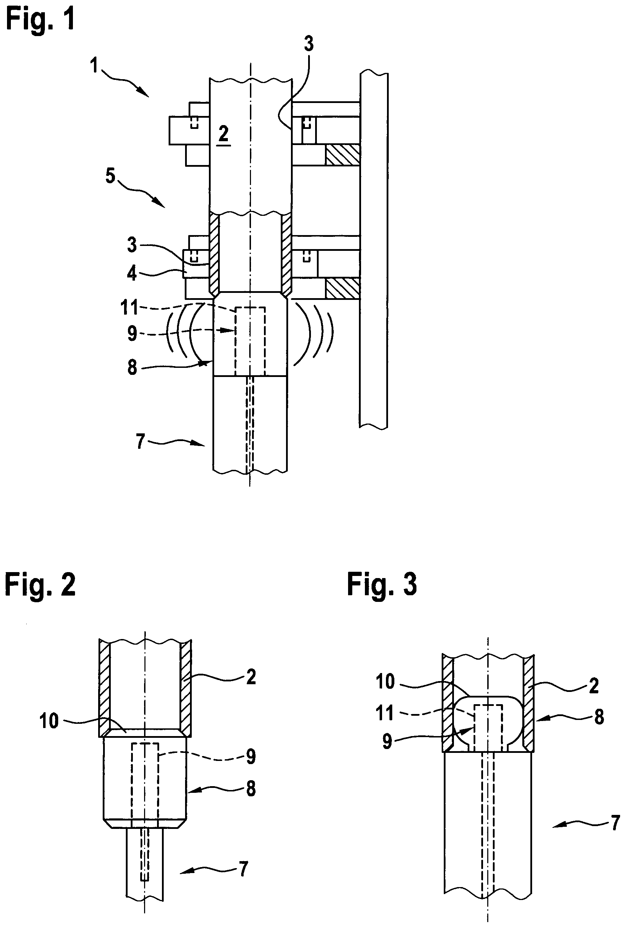

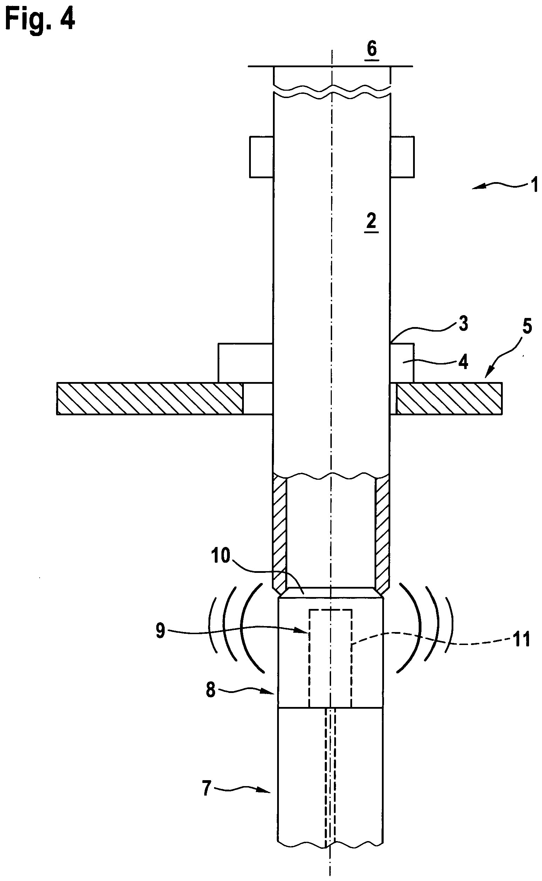

Entsprechend den Figuren 1 und 4, weist eine erfindungsgemäße Vorrichtung 1 zur Montage mehrerer eine Ausnehmung 3 für eine Welle 2 aufweisender Funktionselemente 4, beispielsweise Nocken, Ausgleichsmassen, Zahnräder und/oder Lager, auf der Welle 2 mehrere Halter 5 auf, mittels welchen jeweils ein Funktionselement 4 gehalten werden kann. Die Halter 5 können dabei beispielsweise als Greifer ausgebildet sein, welche das jeweilige Funktionselement 4 kraftschlüssig halten, wie dies beispielsweise gemäß der Figur 1 dargestellt ist, aber auch lediglich als Haltebalkon, wie dies beispielsweise gemäß der Figur 4 dargestellt ist. Darüber hinaus ist ein verstellbarer Führungsschlitten 6 vorgesehen, mittels dem die Welle 2 in einer ersten Richtung, hier von oben, durch die Ausnehmungen 3 der Funktionselemente 4 schiebbar ist. Darüber hinaus ist ein Reitstock 7 vorgesehen, welcher entgegen der ersten Richtung, d.h. im vorliegenden Fall nach oben, verstellbar ist und dessen Reitstockspitze 8 mit einer Stirnseite der Welle 2 gekoppelt werden kann. Erfindungsgemäß ist nun ein Schwingungserreger 9 vorgesehen, der im Reitstock 7 und insbesondere in der Reitstockspitze 8 angeordnet ist und mittels welchem die Reitstockspitze 8 und darüber auch die Welle 2 in Schwingungen versetzt werden kann.

Die Welle 2 ist üblicherweise als Nockenwellenrohr ausgebildet, wogegen die Funktionselemente 4 üblicherweise als Nocken ausgebildet sind, und wobei ein thermisches Fügen zwischen Welle 2 und Funktionselementen 4 erfolgt. Selbstverständlich kann alternativ hierzu zu Welle 2 auch mittels Presspassung mit den Funktionselementen 4 verbunden werden.

Betrachtet man die Reitstockspitze 8 gemäß den Figuren 1 bis 4, so kann man an dieser eine stirnseitige Fase 10 erkennen, mittels welcher die Reitstockspitze 8 zumindest teilweise in die Welle 2 einsteckbar und zugleich schwingungsübertragend mit dieser koppelbar ist. Der Schwingungserreger 9 selbst ist dabei an- und abschaltbar und zudem so ausgebildet, dass die von diesem erzeugten Schwingungen hinsichtlich ihrer Frequenz und/oder Amplitude einstellbar sind. Prinzipiell ist die Vorrichtung selbstverständlich auch für nur ein einziges Funktionselement 4 verwendbar. Der für das mindestens eine Funktionselement 4 bestimmte Halter 5 kann darüber hinaus verlagerbar sein, insbesondere in einer zur Achse der Welle 2 orthogonal liegenden Ebene.

Wie bereits voran beschrieben, sind der Führungsschlitten 6 und mit diesem die Welle 2 vertikal von oben und der Reitstock 7 vertikal von unten die vertikal übereinander in den Haltern 5 gehaltene Funktionselemente 4 einfahrbar, wobei ein vertikales Einschieben der Welle 2 von oben besonders vorteilhaft ist, da sich diese in diesem Fall bereits durch die Schwerkraft selbst ausrichtet.

Ein Außendurchmesser des Reitstocks 7 bzw. der Reitstockspitze 8 ist dabei kleiner als ein Innendurchmesser der Ausnehmungen 3 der Funktionselemente 4, so dass diese vorzugsweise berührungsfrei durch die Ausnehmungen 3 geschoben werden kann. Lediglich bei stark hinsichtlich ihrer Ausrichtung verschobenen Funktionselemente 4 kann bereits das Durchschieben des Reitstocks 7 zum Vorausrichten der einzelnen Funktionselemente 4 benutzt werden.

Der Schwingungserreger 9 besitzt dabei einen Exzenter 11, der insbesondere hydraulisch, pneumatisch oder vorzugsweise elektromotorisch angetrieben ist.

Mit der erfindungsgemäßen Vorrichtung 1 ist es erstmals möglich, beim Fügen einer Welle 2 mit Funktionselementen 4 ein Anhaften der Funktionselemente 4 zu vermeiden zumindest aber zu reduzieren, da die Kontaktkräfte durch das ständig auftretende minimale Rütteln zumindest reduziert werden. Zugleich kann auch ein Hängenbleiben bzw. Verkippen der Funktionselemente 4 verhindert werden. Dies ist beim Durchfahren von mehr als einem Funktionselement 4 besonders vorteilhaft, da bei mehreren zu durchfahrenden Funktionselementen 4, das zuerst durchfahrene Funktionselement 4 bereits abkühlt und damit das zum Durchfahren zur Verfügung stehende Spiel stets kleiner und damit auch die Gefahr des Hängenbleibens vergrößert wird. Die mittels des Schwingungserregers 9 erzeugten Schwingungen und die dadurch entstehenden Kräfte sind selbstverständlich stets kleiner als die Greiferkraft im Greifer bzw. im Halter 5, so dass die insbesondere im Greifer gegriffenen Funktionselemente 4 nicht hinsichtlich ihrer Position beeinträchtig werden.

Die Schwingungen können dabei bereits schon beim Hochfahren der Reitstockspitze 8 angewandt werden und somit eine erste Korrektur eines Koaxialfehlers ermöglichen. Durch die Möglichkeit, den Schwingungserreger 9 zu- und abzuschalten, ist es auch vorstellbar, die Vibration nur beim Durchfahren des Wellenendes durch ein zugehöriges Funktionselement 4 zuzuschalten und damit das Funktionselement 4, beispielsweise den Nocken, korrekt einzufädeln.

Wird lediglich ein einzelner Nocken bzw. ein einzelnes Funktionselement 4 gefügt, oder befindet sich die Welle 2 beim Fügen von mehreren Funktionselementen 4 in ihrer Endlage, kann die Amplitude und/oder die Frequenz der vom Schwingungserreger 9 erzeugten Schwingungen gesteigert werden, um die Welle 2 verstärkt in einen Mikrokontakt mit der Nabe des Funktionselements 4 zu bringen und damit eine schnellere Abkühlung zu bewirken, wodurch wiederum die Taktzeit reduziert werden kann.

Der Schwingungserreger 9 befindet sich dabei in dem gezeigten Ausführungsbeispiel in der Reitstockspitze 8, wobei selbstverständlich die Reitstockspitze 8 selbst auf den Reitstock 7 aufsetzbar und auch von diesem abnehmbar ist, so dass ein und derselbe Schwingungserreger 9 auf unterschiedlichste Reitstöcke 7 aufsetzbar ist.

Mit der erfindungsgemäßen Vorrichtung 1 und insbesondere auch mit dem erfindungsgemäßen Verfahren, bei welchem beim Fügen der Funktionselemente 4 auf die Welle 2 die Welle 2 mittels des Schwingungserregers 9 in Schwingungen versetzt wird, kann ein besonders hochqualitatives Fügen bei zugleich reduzierter Taktzeit erreicht werden.

## Patentansprüche

1. Vorrichtung (1) zur Montage eines oder mehrerer eine Ausnehmung (3) für eine Welle (2) aufweisender Funktionselemente (4), insbesondere Nocken, Ausgleichsmassen, Zahnrädern und/oder Lager, auf der Welle (2),
- wobei die Vorrichtung (1) mindestens einen für jeweils ein Funktionselement (4) bestimmten Halter (5) aufweist,
- wobei ein verstellbarer Führungsschlitten (6) vorgesehen ist, mittels dem die Welle (2) in einer ersten Richtung durch die Ausnehmung (3) des mindestens einen Funktionselements (4) schiebbar ist,
- wobei ein entgegen der ersten Richtung verstellbarer Reitstock (7) vorgesehen ist, dessen Reitstockspitze (8) mit einer Stirnseite der Welle (2) koppelbar ist, wobei ein Schwingungserreger (9) vorgesehen ist,
**dadurch gekennzeichnet, dass** der Schwingungserreger (9) im Reitstock angeordnet ist.

2. Vorrichtung nach Anspruch 1,
**dadurch gekennzeichnet,**
**dass** der für das mindestens eine Funktionselement (4) bestimmte Halter (5) verlagerbar, insbesondere in einer zur Achse der Welle (2) orthogonal liegenden Ebene verlagerbar, ist.

3. Vorrichtung nach Anspruch 1 oder 2,
**dadurch gekennzeichnet,**
**dass** die Reitstockspitze (8) eine stirnseitige Fase (10) aufweist, mittels welcher die Reitstockspitze (8) zumindest teilweise in die Welle (2) einsteckbar ist.

4. Vorrichtung nach Anspruch 1, 2 oder 3,
**dadurch gekennzeichnet,**
- **dass** der Schwingungserreger (9) an- und abschaltbar ist und/oder
- **dass** der Schwingungserreger (9) hinsichtlich der Frequenz und der Amplitude der erzeugten Schwingungen einstellbar ist.

5. Vorrichtung nach einem der Ansprüche 1 bis 4,
**dadurch gekennzeichnet,**
**dass** der Schwingungserreger (9) in der Reitstockspitze (8) angeordnet ist.

6. Vorrichtung nach einem der Ansprüche 1 bis 5,
**dadurch gekennzeichnet,**
**dass** der Führungsschlitten (6) vertikal von oben und der Reitstock (7) vertikal von unten in mindestens ein in zumindest einem Halter (5) gehaltenes Funktionselement (4) einfahrbar sind.

7. Vorrichtung nach einem der vorherigen Ansprüche,
**dadurch gekennzeichnet,**
**dass** ein Außendurchmesser des Reitstocks (7) und der Reitstockspitze (8) kleiner ist als ein Innendurchmesser der Ausnehmung (3) des Funktionselements (4).

8. Vorrichtung nach einem der Ansprüche 1 bis 7,
**dadurch gekennzeichnet,**
**dass** der Schwingungserreger (9) einen Exzenter (11) aufweist, der hydraulisch, elektrisch oder pneumatisch angetrieben ist.

9. Verfahren zum thermischen Fügen von zumindest einem eine Ausnehmung (3) aufweisenden Funktionselement (4), insbesondere Nocke, Ausgleichsmasse, Zahnrad und/oder Lager, auf einer Welle (2) mittels einer Vorrichtung (1) nach einem der vorhergehenden Ansprüche, bei dem
- das Funktionselement (4) in einen Halter (5) eingelegt wird,
- von unten der Reitstock (7) durch die Ausnehmung (3) gefahren wird und dabei das Funktionselement (4) vorausrichtet,
- der Reitstock (7) mit der im Führungsschlitten (6) gehaltenen Welle (2) stirnseitig gekoppelt wird,
- der Schwingungserreger (9) aktiviert wird,
- die Welle (2) mittels des verstellbaren Führungsschlittens (8) von oben durch die Ausnehmung (3) des Funktionselements (4) geschoben wird.

10. Verfahren zum thermischen Fügen von mehreren jeweils eine Ausnehmung (3) aufweisenden Funktionselemente (4), insbesondere Nocken, Ausgleichsmassen, Zahnrädern und/oder Lager, auf einer Welle (2) mittels einer Vorrichtung (1) nach einem der Ansprüche 1 bis 8, bei dem
- die Funktionselemente (4) in vertikal übereinander angeordnete Halter (5) eingelegt werden,
- von unten der Reitstock (7) durch die Ausnehmungen (3) gefahren wird und dabei die Funktionselemente (4) vorausrichtet,
- der Reitstock (7) mit der im Führungsschlitten (6) gehaltenen Welle (2) stirnseitig gekoppelt wird,
- der Schwingungserreger (9) aktiviert wird,
- die Welle (2) mittels des verstellbaren Führungsschlittens (8) von oben durch die Ausnehmungen (3) der Funktionselemente (4) geschoben wird.

11. Verfahren nach Anspruch 9 oder 10,
**dadurch gekennzeichnet,**
- **dass** die Frequenz und/oder die Amplitude der von dem Schwingungserreger (9) erzeugten Schwingungen erhöht werden, sobald die Welle (2) ihre Endlage erreicht hat, und/oder
- **dass** die Frequenz und/oder die Amplitude der von dem Schwingungserreger (9) erzeugten Schwingungen während dem Durchfahren des mindestens einen Funktionselements (4), variiert, insbesondere an- und aus geschaltet werden.

## Claims

1. Device (1) for mounting one or a plurality of functional elements (4) comprising a recess (3) for a shaft (2), in particular cams, equalizing weights, toothed wheels and/or bearings, on the shaft (2),
- wherein the device (1) comprises at least one holder (5) intended for each functional element (4),
- wherein an adjustable guide carriage (6) is provided by means of which the shaft (2) can be slid in a first direction through the recess (3) of the at least one functional element (4),
- wherein a tailstock (7) adjustable counter to the first direction is provided, whose tailstock tip (8) can be coupled to an end face of the shaft (2), wherein a vibration exciter (9) is provided, **characterised in that** the vibration exciter (9) is arranged in the tailstock.

2. Device according to claim 1,
**characterised in that**
the holder (5) intended for the at least one functional element (4) is displaceable, in particular displaceable in a plane located orthogonally to the axis of the shaft (2).

3. Device according to claim 1 or 2,
**characterised in that**
the tailstock tip (8) comprises an end face chamfer (10) by means of which the tailstock tip (8) can be inserted at least partially into the shaft (2).

4. Device according to claim 1, 2 or 3,
**characterised in that**
- the vibration exciter (9) can be switched on and off
and/or
- the vibration exciter (9) can be set with respect to the frequency and the amplitude of the generated vibrations.

5. Device according to any one of claims 1 to 4,
**characterised in that**
the vibration exciter (9) is arranged in the tailstock tip (8).

6. Device according to any one of claims 1 to 5,
**characterised in that**
the guide carriages (6) can be moved vertically from above and the tailstock (7) vertically from below into at least one functional element (4) held in at least one holder (5).

7. Device according to any one of the preceding claims,
**characterised in that**
an outer diameter of the tailstock (7) and the tailstock tip (8) is smaller than an inner diameter of the recess (3) of the functional element (4).

8. Device according to any one of claims 1 to 7,
**characterised in that**
the vibration exciter (9) comprises an eccentric (11) which is driven hydraulically, electrically or pneumatically.

9. Method for thermally joining at least one functional element (4) comprising a recess (3), in particular a cam, equalizing weight, toothed wheel and/or bearing, on a shaft (2) by means of a device (1) according to any one of the preceding claims, in which
- the functional element (4) is inserted into a holder (5),
- the tailstock (7) is moved from below through the recess (3) and in doing so preliminarily aligns the functional element (4),
- the tailstock (7) is coupled at the end face to the shaft (2) held in the guide carriage (6),
- the vibration exciter (9) is activated,
- the shaft (2) is pushed by means of the adjustable guide carriage (8) from above through the recess (3) of the functional element (4).

10. Method for thermally joining a plurality of functional elements (4) each comprising a recess (3), in particular cams, equalizing weights, toothed wheels and/or bearings, on a shaft (2) by means of a device (1) according to any one of claims 1 to 8, in which
- the functional elements (4) are inserted into holders (5) arranged vertically over each other,
- the tailstock (7) is moved from below through the recesses (3) and in doing so preliminarily aligns the functional elements (4),
- the tailstock (7) is coupled at the end face to the shaft (2) held in the guide carriage (6),
- the vibration exciter (9) is activated,
- the shaft (2) is pushed by means of the adjustable guide carriage (8) from above through the recesses (3) of the functional elements (4).

11. Method according to claim 9 or 10, **characterised in that**
- the frequency and/or the amplitude of the vibrations generated by the vibration exciter (9) are increased, as soon as the shaft (2) has reached its end position and/or
- the frequency and/or the amplitude of the vibrations generated by the vibration exciter (9) are varied, in particular switched on and off, during the passage of the at least one functional element (4).

## Revendications

1. Dispositif (1) pour le montage d'un ou plusieurs éléments fonctionnels (4) présentant un évidement (3) pour un arbre (2), en particulier des cames, des masses de compensation, des roues dentées et/ou des paliers, sur l'arbre (2),
- dans lequel le dispositif (1) présente au moins un support (5) destiné à respectivement un élément fonctionnel (4),
- dans lequel un chariot de guidage (6) réglable est prévu, à l'aide duquel l'arbre (2) peut être poussé dans une première direction au travers de l'évidement (3) de l'au moins un élément fonctionnel (4),
- dans lequel une contre-poupée (7) réglable dans le sens inverse au premier sens est prévue, dont la pointe de contre-poupée (8) peut être couplée à un côté avant de l'arbre (2),
dans lequel un oscillateur (9) est prévu,
**caractérisé en ce que** l'oscillateur (9) est agencé dans la contre-poupée.

2. Dispositif selon la revendication 1,
**caractérisé en ce**
**que** le support (5) destiné à l'au moins un élément fonctionnel (4) peut être déplacé, en particulier peut être déplacé dans un plan se trouvant orthogonal à l'axe de l'arbre (2).

3. Dispositif selon la revendication 1 ou 2,
**caractérisé en ce**
**que** la pointe de contre-poupée (8) présente un chanfrein côté avant (10) à l'aide duquel la pointe de contre-poupée (8) peut être enfichée au moins partiellement dans l'arbre (2).

4. Dispositif selon la revendication 1, 2 ou 3,
**caractérisé en ce**
- **que** l'oscillateur (9) peut être mis en et hors circuit
et/ou
- **que** l'oscillateur (9) peut être réglé en ce qui concerne la fréquence et l'amplitude des oscillations générées.

5. Dispositif selon l'une des revendications 1 à 4,
**caractérisé en ce**
**que** l'oscillateur (9) est agencé dans la pointe de contre-poupée (8).

6. Dispositif selon l'une des revendications 1 à 5,
**caractérisé en ce**
**que** le chariot de guidage (6) peut être rentré verticalement par le haut et la contre-poupée (7) peut être rentrée verticalement par le bas dans au moins un élément fonctionnel (4) maintenu dans au moins un support (5).

7. Dispositif selon l'une des revendications précédentes,
**caractérisé en ce**
**qu'**un diamètre extérieur de la contre-poupée (7) et de la pointe de contre-poupée (8) est inférieur à un diamètre intérieur de l'évidement (3) de l'élément fonctionnel (4).

8. Dispositif selon l'une des revendications 1 à 7,
**caractérisé en ce**
**que** l'oscillateur (9) présente une excentrique (11) qui est entraînée par voie hydraulique, électrique ou pneumatique.

9. Procédé d'assemblage thermique d'au moins un élément fonctionnel (4) présentant un évidement (3), en particulier une came, une masse de compensation, une roue dentée et/ou un palier, sur un arbre (2) à l'aide d'un dispositif (1) selon l'une des revendications précédentes, pour lequel
- l'élément fonctionnel (4) est inséré dans un support (5),
- par le dessous la contre-poupée (7) est déplacée au travers de l'évidement (3) et aligne l'élément fonctionnel (4),
- la contre-poupée (7) est couplée côté avant à l'arbre (2) maintenu dans le chariot de guidage (6),
- l'oscillateur (9) est activé,
- l'arbre (2) est poussé à l'aide du chariot de guidage (8) réglable par le dessus au travers de l'évidement (3) de l'élément fonctionnel (4).

10. Procédé d'assemblage thermique de plusieurs éléments fonctionnels (4) présentant respectivement un évidement (3), en particulier des cames, des masses de compensation, des roues dentées et/ou des paliers, sur un arbre (2) à l'aide d'un dispositif (1) selon l'une des revendications 1 à 8, pour lequel
- les éléments fonctionnels (4) sont insérés dans des supports (5) agencés verticalement les uns au-dessus des autres,
- par le dessous la contre-poupée (7) est déplacée au travers des évidements (3) et aligne les éléments fonctionnels (4),
- la contre-poupée (7) est couplée côté avant à l'arbre (2) maintenu dans le chariot de guidage (6),
- l'oscillateur (9) est activé,
- l'arbre (2) est poussé à l'aide du chariot de guidage (8) réglable par le dessus au travers des évidements (3) des éléments fonctionnels (4).

11. Procédé selon la revendication 9 ou 10,
**caractérisé en ce**
- **que** la fréquence et/ou l'amplitude des oscillations générées par l'oscillateur (9) sont augmentées dès que l'arbre (2) a atteint sa position d'extrémité, et/ou
- **que** la fréquence et/ou l'amplitude des oscillations générées par l'oscillateur (9) sont variées pendant le passage de l'au moins un élément fonctionnel (4), en particulier sont mis en et hors service.
